# FASCICULE DE BREVET EUROPEEN

(11) **EP 0 890 145 B1**
(45) Date de publication et mention de la délivrance du brevet: **07.11.2001**
(21) Numéro de dépôt: 97915526.4
(22) Date de dépôt: 20.03.1997
(51) Int. Cl.: G05D 11/00, E03D 9/03

(54) **DISPOSITIFS DESTINES A DOSER DES FLUIDES SOUS L'EFFET DE CHANGEMENTS DE NIVEAU**
VORRICHTUNG ZUM DOSIEREN VON FLÜSSIGKEITEN UNTER EINWIRKUNG VON FÜLLSTANDSÄNDERUNGEN
DEVICES FOR METERING FLUIDS IN RESPONSE TO LEVEL CHANGES

(30) Priorité: 27.03.1996 FR 9604126
(43) Date de publication de la demande: 13.01.1999
(73) Titulaire: LECOFFRE, Yves, 38000 Grenoble (FR)
(72) Inventeur: Tournassat, Claude, 28220 Saint-Ismier (FR); Lecoffre, Yves, 38000 Grenoble (FR)
(74) Mandataire: Casalonga, Axel
(86) Numéro de dépôt international: FR9700494
(87) Numéro de publication internationale: WO9736218

(56) Documents cités:
- EP-A- 0 570 326
- WO-A-83/00713
- DE-C- 624 731
- US-A- 1 623 132
- US-A- 1 728 737

## Description

Dans les nombreuses applications mettant en jeu des opérations de dosage, il est très fréquent que l'on doive injecter des quantités de fluides selon une fonction prédéfinie de la variation de niveau du liquide contenu dans un réservoir. Très souvent, les quantités injectées doivent être proportionnelles à la variation du niveau ou du volume de liquide dans le réservoir, ladite fonction étant alors linéaire relativement au volume ou au débit.

Ces opérations nécessitent en général la mise en oeuvre de matériels complexes, par exemple un ensemble formé d'un détecteur de niveau, d'une pompe doseuse et d'un régulateur. Ce type de matériel est souvent cher, comporte des pièces mécaniques et des pièces d'étanchéité susceptibles de se déteriorer dans le temps et peut poser des problèmes d'utilisation dans des ambiances agressives, explosives ou d'accès règlementé.

On connait par ailleurs des dispositifs qui, sous l'effet de la pression engendrée par la montée d'un premier fluide permettent simultanément à cette montée de délivrer un second fluide. De tels dispositifs sont décrits dans les documents de brevet US-A-1 728 737, US-A-1 623 132 et EP-A-0 570 326.

La présente invention est relative à un procédé de dosage d'un fluide initialement contenu dans un réservoir R1, ledit dosage étant assuré par l'utilisation des variations de niveau d'un liquide contenu dans un réservoir R32, cette dite variation de niveau permettant le transfert de quantités de fluides maitrisées d'un réservoir à l'autre et dans les tuyauteries liant ces deux réservoirs.

Le dispositif selon l'invention a pour but de délivrer depuis un récipient auxiliaire un volume calibré d'un premier liquide dans un récipient principal contenant un deuxième liquide muni de moyens pour commander des cycles de remplissage et de vidange dudit deuxième liquide.

Selon l'invention, le récipient principal et le récipient auxiliaire présentent entre eux un orifice de communication.

Selon l'invention également, le récipient auxiliaire comprend un élément de calibrage présentant une direction générale verticale et comportant une extrémité inférieure et une extrémité supérieure, ladite extrémité inférieure de l'élément de calibrage étant reliée audit récipient principal pour permettre audit premier ou deuxième liquide de pénétrer dans ledit élément de calibrage d'une hauteur en relation avec la hauteur du deuxième liquide dans ledit récipient principal lors du remplissage dudit récipient principal, par écoulement du premier liquide vers le récipient auxiliaire au travers dudit orifice de communication. Des moyens sont en outre prévus pour commander la sortie d'un volume dudit premier liquide hors dudit récipient auxiliaire sensiblement égal au volume du premier ou du deuxième liquide ayant pénétré dans ledit élément de calibrage lors d'une phase de vidange dudit récipient principal, par écoulement du second liquide vers le récipient principal au travers dudit orifice de communication.

D'autres caractéristiques et avantages de la présente invention apparaîtront mieux à la lecture de la description qui suit des principes et plusieurs modes de mise en oeuvre de l'invention donnés à titre d'exemples non limitatifs. La description se réfère aux figures annexées sur lesquelles :
- la figure 1 illustre un mode de réalisation de l'invention dans lequel une quantité contrôlée de liquide est extraite du réservoir RI sous l'effet de la vidange du réservoir R2.
- la figure 2 illustre un autre mode de réalisation de l'appareil dans lequel le fluide extrait du résevoir R1 est introduit pratiquement sans retard dans le réservoir R2.
- la figure 3 illustre un mode de réalisation de l'appareil dans lequel du fluide issu du réservoir R2 est introduit dans le réservoir R1 sous l'effet d'une augmentation de niveau dans le réservoir R2, se mélange au fluide initialement contenu dans R1, un débit contrôlé dudit mélange étant ensuite extrait de R1 lors de la vidange de R2 par vidange d'une tuyauterie ouverte à sa partie supérieure.
- La figure 4 illustre un autre mode de réalisation de la fonction précédente dans lequel le contrôle de débit se fait dans une tuyauterie fermée formant réservoir.
- Et la figure 5 illustre une variante de réalisation de l'appareil de la figure 4.

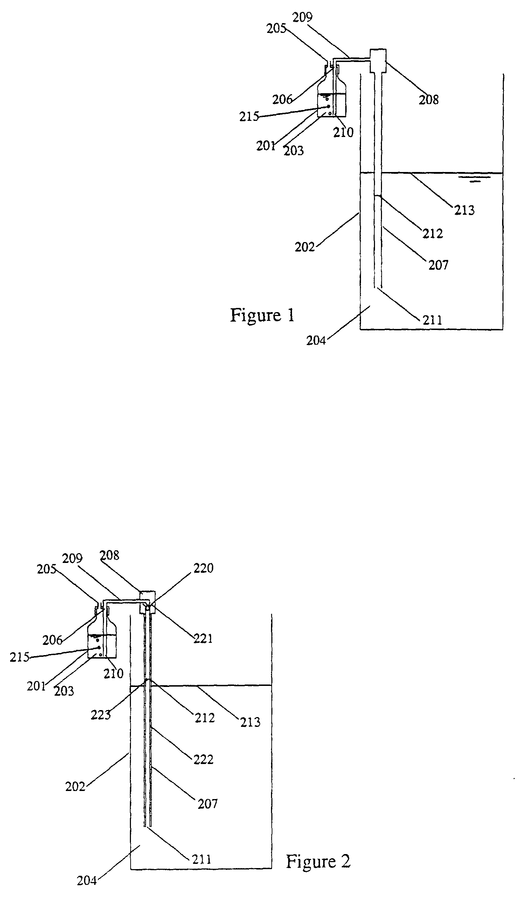

La figure 1 décrit un système permettant d'extraire un volume v d'un réservoir R1 lorsque le réservoir R2 est en phase de vidange. On retrouve le réservoir R1 (201) contenant le produit à diffuser 203 et le réservoir récepteur R2 (202) contenant le liquide 204 . Le réservoir R1 est muni à sa partie supérieure de deux orifices de sortie 205 et 206. L'orifice 205 est en contact avec l'atmosphère située au dessus de la surface libre 213 du réservoir R2. L'orifice 206 est, quant à lui, relié par l'intermédiaire de la tuyauterie 209 au réservoir intermédiaire 208, lui-même relié au tube plongeur 207 pénétrant dans le liquide 204 contenu dans la cuve R2. Lorsque le réservoir R2 est vide, le tube 207 est lui-même vide de liquide. Lorsqu'on verse du liquide dans le réservoir R2, le niveau 213 monte et le niveau 212 dans le tube monte également, mettant en pression l'air contenu dans la partie supérieure du tube 207. Ceci force un débit d'air à pénétrer en 210 dans le liquide contenu dans le réservoir R1 (201) Il s'échappa sous forme de bulles 215 dans le liquide 203 puis se répand dans l'atmosphère au travers du tube d'évent 205. Le niveau dans le tube 207 peut ainsi monter sans trop perturber le liquide contenu dans le réservoir R1. Lors de la vidange du réservoir R2, les niveaux 213, puis 212 baissent. Un vide relatif se crée en partie supérieure de la tuyauterie 207. Ceci force le liquide 203 contenu dans le réservoir R1 à pénétrer dans la tuyauterie 209 puis dans le réservoir 208 pour atteindre sous forme de gouttes ou de ruissellements la tuyauterie 207. L'application des lois de l'hydrostatique montre que la pression d'air dans la partie supérieure du tube 207 est pratiquement constante et égale à la pression atmosphérique si la hauteur du réservoir R1 est faible. On en déduit que le débit aspiré dans la colonne 207 est égal au produit de la vitesse de descente de la surface libre 213 par la section s de la tuyauterie 207. On retrouve donc les mêmes relations que dans le cas précédent, à savoir qu'une diminution de hauteur Δh conduit à modifier les volumes selon les lois suivantes :
- le volume de liquide pénétrant dans le réservoir R2 (202), V=S Δh
- le volume de liquide pénétrant dans le tube 207, v=s Δh
- le volume de liquide sortant du réservoir R1 (201), également égal à v=s Δh
- le rapport des volumes transférés v et V est égal au rapport des sections s et S, comme dans le cas illustré par la figure 1.

La vidange se termine par mise à l'air libre de l'extrémité 211 de la tuyauterie 207. Le liquide restant dans ledit tube 207 tombe alors dans le réservoir R2. le cycle peut alors recommencer.

Il est possible de faire varier la position verticale du réservoir R1, avec la limitation propre à cette application que le point- culminant de la tuyauterie 209 doit toujours être au dessus du niveau 213.

On notera que, dans sa phase initiale de remplissage, ce système permet de doser l'air s'échappant de la tuyauterie 205 proportionnellement à la variation du niveau 213 et à la section s.

La figure 2 donne une variante du système précédent caractérisé en ce que les gouttes 220 provenant de la tuyauterie 209 tombent dans un cône récepteur 221, puis dans une tuyauterie 222 de diamètre inférieur à la tuyauterie 207. Ceci permet d'éviter que le fluide provenant de R1 ne stagne au dessus du fluide aspiré dans 207 lors de la phase de remplissage de R2. Son arrivée dans le réservoir R2 serait alors différée pendant la vidange. Au contraire, en utilisant ce tube 222, les niveaux 212 et 223 dans les tubes 207 et 222 étant quasi identiques lorsque les masses volumiques des fluides 203 et 204 sont proches, le temps de transit du fluide 203 vers l'extrémité 224 du tube 222 sera beaucoup plus rapide que dans le cas précédent. Le rapport des vitesses de descente entre le cas présent et le cas de la figure 2 est égal à s/s', s et s' étant respectivement les rapports des sections de la partie utile de la tuyauterie 207 à celle de la tuyauterie 222. Le fluide à doser peut donc arriver très rapidement dans R2.

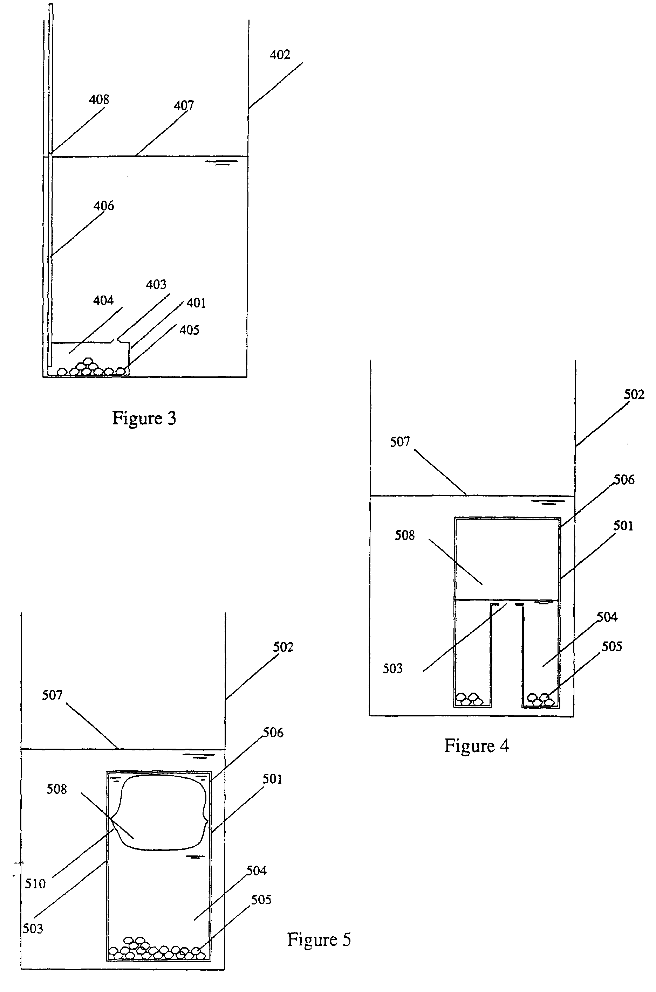

La figure 3 représente un doseur destiné à injecter une dose d'un liquide saturé en un produit dissous à partir d'une matière solide à chaque vidange d'un réservoir R2 (402). Le liquide saturé en produit dissous 404 est contenu dans un réservoir R1 (401) muni d'un petit orifice 403 à sa partie supérieure. R1 contient des solides solubles 405 qui permettent de garder le liquide 404 en état saturé quelles que soient les variations de température. Ce petit réservoir R1 est muni, par ailleurs, d'une tuyauterie de grande longueur 406 dont le sommet ouvert est situé au dessus du niveau haut du réservoir. La section de cette tuyauterie 406 est notée s.

Avant remplissage de R2, on suppose que R1 est rempli d'un liquide saturé dont le niveau haut est celui de l'orifice 403. Lorsqu'on remplit R2, le niveau 407 dans R2 monte ainsi que le niveau 408 dans le tube 406. Ces niveaux sont égaux si on néglige les effets de tension superficielle et proches l'un de l'autre dans le cas contraire. On comprend qu'à mesure qu'on remplit R2, du liquide provenant de R2 pénètre dans R1. Ce liquide se mélange avec le liquide déjà présent dans R1 et se sature dans la matière dissoute. Lorsque la vidange de R2 se produit, le niveau baisse dans R2 et dans le tube 406. Du liquide est donc éjecté de R1 et se mélange au liquide contenu dans R2. Si le réservoir R2 (402) et la tuyauterie 406 sont cylindriques de sections respectives S et s, le rapport des débits q s'échappant de R1 et Q s'échappant de R2 est égal à nouveau à S/s. Ce système est donc un moyen particulièrement simple d'introduire un débit d'un liquide saturé en matière dissoute proportionnel à un débit principal. La précision du rapport des volumes transférés pendant une vidange peut être tout à fait excellente. Ce système constitue donc un appareil de dosage bon marché, précis et particulièrement fiable.

La figure 4 représente un doseur destiné à injecter une dose d'un liquide saturé en un produit dissous à partir d'une matière solide à chaque vidange d'un réservoir R2 (502). Le liquide saturé en produit diisous 504 est contenu dans un réservoir R1 (501) muni d'un petit orifice 503 à sa partie supérieure. R1 contient des matériaux solubles 505 qui permettent de garder le liquide 504 en état saturé quelles que soient les variations de température. Ce petit réservoir R1 est muni, par ailleurs, d'un réservoir 506 dont le sommet est fermé. Ce réservoir 506 contient de l'air à condition que l'orifice 503 soit disposé à la base dudit réservoir 506.

Avant remplissage de R2, on suppose que R1 est rempli d'un liquide saturé dont le niveau haut est celui de l'orifice 503. Lorsqu'on remplit R2, le niveau 507 dans R2 monte ainsi que le niveau et la pression dans le réservoir 506 en raison de la compressibilité des gaz. On comprend qu'à mesure qu'on remplit R2, du liquide provenant de R2 pénètre dans R1. Ce liquide se mélange avec le liquide déjà présent dans R1 et se sature dans la matière dissoute. Lorsque la vidange de R2 se produit, le niveau baisse dans R2 et dans le réservoir 506. Du liquide saturé est donc éjecté de R1 et se mélange au liquide contenu dans R2. Ce système est donc également un moyen particulièrement simple d'introduire un débit d'un liquide saturé en matière dissoute proportionnel à un débit principal. La précision du rapport des volumes transférés pendant une vidange peut être tout à fait excellente. Ce système constitue donc, comme le système décrit sur la figure 4, un appareil de dosage bon marché, précis et particulièrement fiable.

La figure 5 représente une variante de la solution représentée sur la figure 4 dans laquelle l'air contenu dans R2 est placé dans une enveloppe souple 510, ce qui permet d'éviter qu'il ne se dissolve dans le liquide contenu dans ledit réservoir. Dans cette dernière solution, l'orifice 503 de communication de R2 avec le fluide contenu dans le réservoir R1 502 est placé indifféremment en partie haute basse ou latérale du réservoir comme c'est le cas sur la figure 6. Ce réservoir peut éventuellement subir des changements de position azimutale sans perdre de son efficacité.

## Revendications

1. Dispositif pour délivrer depuis un récipient auxiliaire (201, 401, 501) un volume calibré d'un premier liquide (203, 404, 504) dans un récipient principal (202, 402, 502) contenant un deuxième liquide (204) muni de moyens pour commander des cycles de remplissage et de vidange dudit deuxième liquide, **caractérisé par le fait que** le récipient principal (202, 402, 502) et le récipient auxiliaire (201, 401, 501) présentent entre eux un orifice de communication (211, 403, 503) et que le récipient auxiliaire comprend un élément de calibrage (207, 406, 506) présentant une direction générale verticale et comportant une extrémité inférieure et une extrémité supérieure, ladite extrémité inférieure de l'élément de calibrage étant reliée audit récipient principal (202, 402, 502) pour permettre audit premier ou deuxième liquide de pénétrer dans ledit élément de calibrage d'une hauteur en relation avec la hauteur du deuxième liquide dans ledit récipient principal lors du remplissage dudit récipient principal, par écoulement du premier liquide vers le récipient auxiliaire au travers dudit orifice de communication, et des moyens pour commander la sortie d'un volume dudit premier liquide hors dudit récipient auxiliaire sensiblement égal au volume du premier ou du deuxième liquide ayant pénétré dans ledit élément de calibrage lors d'une phase de vidange dudit récipient principal, par écoulement du second liquide vers le récipient principal au travers dudit orifice de communication.

2. Dispositif selon la revendication 1, **caractérisé en ce que** ledit élément de calibrage (207) est un élément tubulaire dont l'extrémité inférieure débouche dans ledit récipient principal (202) et **en ce que** les moyens pour provoquer la sortie du volume dudit premier liquide comprennent des moyens formant siphon (208,209) dont une première extrémité est raccordée de façon étanche à l'extrémité supérieure dudit élément tubulaire et dont l'autre extrémité débouche dans ledit récipient auxiliaire (201).

3. Dispositif selon la revendication 2 **caractérisé en ce que** ladite deuxième extrémité (210) des moyens formant siphon (208,209) débouche dans ledit récipient auxiliaire (201) en dessous du niveau libre dudit premier liquide (203) et **en ce que** ledit récipient auxiliaire (201) est ouvert à sa partie supérieure, par quoi, durant la phase de remplissage dudit récipient principal (202), le deuxième liquide pénétrant dans ledit élément tubulaire (207) chasse de celui ci un volume d'air égal, et, durant la phase de vidange, le vide créé par ledit élément tubulaire par la descente dudit deuxième liquide (204) dans celui-ci provoque par aspiration la sortie d'un volume égal dudit premier liquide (203) depuis ledit récipient auxiliaire (201) dans ledit élément tubulaire.

4. Dispositif selon la revendication 1, **caractérisé en ce que** ledit récipient auxiliaire (401,501) est raccordé par sa partie supérieure audit récipient principal par un orifice de section réduite(403,503), **en ce que** ledit récipient auxiliaire contient un produit (405,505)qui, combiné au deuxième liquide traversant ledit récipient, donne ledit premier liquide à délivrer (404,504) et **en ce que** l'extrémité inférieure dudit élément de calibrage (406) débouche dans ledit récipient auxiliaire par quoi ledit élément de calibrage peut recevoir ledit premier liquide (404) provenant dudit récipient auxiliaire.

5. Dispositif selon la revendication 4, **caractérisé en ce que** l'extrémité supérieure de l'élément de calibrage (406,506) est obturée, par quoi lors de la montée du deuxième liquide dans le récipient principal, celui-ci pénètre dans ledit récipient auxiliaire (401,501) en se transformant en le premier liquide et pénètre dans ledit élément de calibrage (406,506) en comprimant l'air qu'il contient, d'une hauteur en relation avec le niveau libre (407,507) du deuxième liquide dans ledit récipient principal.

6. Dispositif selon la revendication 5, **caractérisé en ce que** l'air (508) contenu dans ledit élément de calibrage est enfermé dans une enveloppe étanche déformable (510).

7. Dispositif selon la revendication 4, **caractérisé en ce que** ledit élément de calibrage (406) est un élément tubulaire dont ladite deuxième extrémité supérieure est ouverte et est disposée à un niveau supérieur au niveau libre (407) du deuxième liquide dans ledit récipient principal lorsque ledit récipient est rempli.

## Patentansprüche

1. Vorrichtung zum Ausgeben eines genau bemessenen Volumens einer ersten Flüssigkeit (203, 404, 504) von einem Hilfsbehälter (201, 401, 501) in einen Hauptbehälter (202, 402, 502), der eine zweite Flüssigkeit (204) enthält und mit Einrichtungen zum Steuern der Zyklen des Füllens und des Leerens der besagten zweiten Flüssigkeit versehen ist, **dadurch gekennzeichnet, daß** der Hauptbehälter (202, 402, 502) und der Hilfsbehälter (201, 401, 501) dazwischen eine Verbindungsöffnung (211, 403, 503) aufweisen und daß der Hilfsbehälter ein Bemessungselement (207, 406, 506), das eine im wesentlichen vertikale Richtung hat und ein unteres Ende und ein oberes Ende aufweist, welches untere Ende des Bemessungselementes mit dem Hauptbehälter (202, 402, 502) verbunden ist, damit die erste oder die zweite Flüssigkeit in das Bemessungselement bis auf eine Höhe in Abhängigkeit von der Höhe der zweiten Flüssigkeit in dem Hauptbehälter während des Füllens des Hauptbehälters eintreten kann, indem die erste Flüssigkeit über die Verbindungsöffnung zum Hilfsbehälter fließt, und Einrichtungen zum Steuern des Austritts eines Volumens der besagten ersten Flüssigkeit während einer Entleerungsphase des Hauptbehälters aus dem Hilfsbehälter im wesentlichen gleich dem Volumen der ersten oder der zweiten Flüssigkeit, die in das Bemessungelement eingetreten ist, indem die zweite Flüssigkeit über die Verbindungsöffnung zum Hauptbehälter fließt, umfasst.

2. Vorrichtung nach Anspruch 1, **dadurch gekennzeichnet, daß** das Bemessungselement (207) ein rohrförmiges Element ist, dessen unteres Ende im Hauptbehälter (202) mündet, und daß die Einrichtungen, die für den Austritt des Volumens der ersten Flüssigkeit sorgen, Einrichtungen umfassen, die einen Siphon (208, 209) bilden, dessen erstes Ende dicht mit dem oberen Ende des rohrförmigen Elementes verbunden ist und dessen anderes Ende im besagten Hilfsbehälter (201) mündet.

3. Vorrichtung nach Anspruch 2, **dadurch gekennzeichnet, daß** das zweite Ende (201) der Einrichtungen, die einen Siphon (208, 209) bilden, im Hilfsbehälter (201) unter der freien Höhe der ersten Flüssigkeit (203) mündet und daß der Hilfsbehälter (201) an seinem oberen Teil offen ist, so daß während der Phase des Füllens des Hauptbehälters (202) die zweite Flüssigkeit in das rohrförmige Element (207) eintritt und darin ein gleiches Luftvolumen verdrängt und während der Phase des Leerens der aufgrund eines Absinkens der zweiten Flüssigkeit (204) durch das rohrförmige Element erzeugte Hohlraum zu einem Ansaugen eines Austritts mit gleichem Volumen der ersten Flüssigkeit (203) vom Hilfsbehälter (201) in das rohrförmige Element sorgt.

4. Vorrichtung nach Anspruch 1, **dadurch gekennzeichnet, daß** der Hilfsbehälter (401, 501) an seinem oberen Teil mit dem Hauptbehälter über eine Öffnung mit reduziertem Querschnitt (403, 503) verbunden ist, daß der Hilfsbehälter ein Material (405, 505) enthält, das kombiniert mit der zweiten Flüssigkeit, die durch den besagten Behälter hindurchgeht, dazu führt, daß die erste Flüssigkeit (404, 504) abgegeben wird, und daß das untere Ende des Bemessungselementes (406) im Hilfsbehälter mündet, so daß das Bemessungselement die erste Flüssigkeit (404), die vom Hilfsbehälter kommt, aufnehmen kann.

5. Vorrichtung nach Anspruch 4, **dadurch gekennzeichnet, daß** das obere Ende des Bemessungselementes (406, 506) verschlossen ist, so daß während des Anstiegs der zweiten Flüssigkeit im Hauptbehälter diese in den Hilfsbehälter (401, 501) eintritt, indem sie sich in die erste Flüssigkeit umwandelt, und in das Bemessungselement (406, 506) eintritt, indem sie die darin enthaltene Luft komprimiert, und zwar bis auf eine Höhe in Abhängigkeit von der freien Höhe (407, 507) der zweiten Flüssigkeit im Hauptbehälter.

6. Vorrichtung nach Anspruch 5, **dadurch gekennzeichnet, daß** die Luft (508), die im Bemessungselement enthalten ist, in einer dichten verformbaren Hülle (510) eingeschlossen ist.

7. Vorrichtung nach Anspruch 4, **dadurch gekennzeichnet, daß** das Bemessungselement (406) ein rohrförmiges Element ist, dessen zweites oberes Ende offen und auf einer Höhe über der freien Höhe (407) der zweiten Flüssigkeit im Hauptbehälter angeordnet ist, wenn der besagte Behälter gefüllt ist.

## Claims

1. Device for delivering a calibrated volume of a first liquid (203, 404, 504) from an auxiliary container (201, 401, 501) to a main container (202, 402, 502) with a second liquid (204) provided with means for controlling filling and draining cycles of said second liquid, **characterized in that** the main container (202, 402, 502) and the auxiliary container (201, 401, 501) have between them a communication orifice (211, 403, 503) and **in that** the auxiliary container includes a calibration member (207, 406, 506) having a generally vertical direction and having a lower end and a top end, said lower end of the calibration member being connected to said main container (202, 402, 502) to allow said first or second liquid to enter said calibration member from a height related to the height of the second liquid in said main container when filling said main container by passing the first liquid to the auxiliary container through said communication orifice, and means for controlling the exit of a volume of said first liquid out of said auxiliary container substantially equal to the volume of the first or the second liquid that has entered said calibration member during a phase of draining said main container by passing the second liquid to the main container through said communication orifice.

2. Device according to claim 1 **characterized in that** said calibration member (207) is a tubular member the bottom end of which opens into said main container (202) and **in that** the means for causing the exit of the volume of said first liquid comprise siphon means (208, 209) a first end of which is connected and sealed to the upper end of said tubular member and the other end of which opens into said auxiliary container (201).

3. Device according to claim 2 **characterized in that** said second end (210) of the siphon means (208, 209) opens into said auxiliary container (201) below the level of the surface of said first liquid (203) and **in that** said auxiliary container (201) is open at the top whereby during the phase of filling said main container (202) the second liquid entering said tubular member (207) dispels therefrom an equal volume of air and during the draining phase the vacuum created by said tubular element by virtue of the descent of said second liquid (204) therein causes an equal volume of said first liquid (203) to be aspirated from said auxiliary container (201) into said tubular member.

4. Device according to claim 1 **characterized in that** said auxiliary container (401, 501) is connected at the top to said main container by a small orifice (403, 503), **in that** said auxiliary container contains a product (405, 505) which, combined with the second liquid passing through said container, gives said first liquid to be delivered (404, 504) and **in that** the bottom end of said calibration member (406) opens into said auxiliary container whereby said calibration member can receive said first liquid (404) from said auxiliary container.

5. Device according to claim 4 **characterized in that** the top end of the calibration member (406, 506) is closed whereby when the second liquid rises in the main container it enters said auxiliary container (401, 501), becoming converted into the first liquid, and enters said calibration member (406, 506), compressing the air that it contains, to a height related to the surface level (407, 507) of the second liquid in said main container.

6. Device according to claim 5 **characterized in that** the air (508) contained in said calibration member is enclosed in a deformable sealed envelope (510).

7. Device according to claim 4 **characterized in that** said calibration member (406) is a tubular member said upper second end of which is open and is disposed at a higher level than the surface level (407) of the second liquid in said main container when said container is filled.
